# EUROPÄISCHE PATENTANMELDUNG

(11) **EP 2 463 634 A1**
(43) Veröffentlichungstag der Anmeldung: **13.06.2012**
(21) Anmeldenummer: 11191384.4
(22) Anmeldetag: 30.11.2011
(51) Int. Cl.: G01L 3/22, G01L 5/28, G01M 17/007

(54) **Prüfstand für Kraftfahrzeuge**

(30) Priorität: 09.12.2010 DE 102010054008; 25.11.2011 DE 102011087143
(71) Anmelder: Cartesy GmbH, 84524 Neuötting (DE)
(72) Erfinder: Femböck, Josef, 84524 Neuötting (DE)
(74) Vertreter: Ullrich & Naumann

(57) **Zusammenfassung**

Ein Prüfstand für Kraftfahrzeuge, insbesondere Rollen- oder Bandbremsprüfstand, mit einer eine Messsensorik (1) aufweisenden Messeinrichtung (2) zur Aufnahme von Prüfdaten ist im Hinblick auf eine besonders flexible und quasi ortsunabhängige Nutzbarkeit durch einen aufladbaren Energiespeicher (3) zur Bereitstellung der für den Betrieb der Messeinrichtung (2) erforderlichen elektrischen Energie und eine Zuführeinrichtung (4) zum Zuführen der Energie in den Energiespeicher (3) gekennzeichnet.

## Beschreibung

Die vorliegende Erfindung betrifft einen Prüfstand für Kraftfahrzeuge, insbesondere Rollen- oder Bandbremsprüfstand, mit einer eine Messsensorik aufweisenden Messeinrichtung zur Aufnahme von Prüfdaten.

Prüfstände der eingangs genannten Art sind aus der Praxis bekannt und existieren in verschiedenen Ausführungsformen. Ein derartiger Prüfstand für Kraftfahrzeuge ist beispielsweise aus der WO 03/074987 A1 bekannt. Der bekannte Prüfstand weist eine Messeinrichtung zur Aufnahme von Prüfdaten auf. Die Messeinrichtung umfasst eine geeignete Messsensorik, wobei bei dem bekannten Prüfstand die beim Bremsen eines Fahrzeugs wirkende Kraft messbar ist.

Prüfstände der eingangs genannten Art finden ihre Anwendung beispielsweise in Kraftfahrzeug-Werkstätten oder sonstigen Prüfeinrichtungen, insbesondere bei der Durchführung der sogenannten Hauptuntersuchung für Kraftfahrzeuge. Zum Betrieb der bekannten Prüfstände sind diese Prüfstände an eine elektrische Stromversorgung angeschlossen, die die für den Betrieb des jeweiligen Prüfstands benötigte Energie zur Verfügung stellt. Diese Energieversorgung wird beispielsweise für den Antrieb von Rollen oder Laufbändern bei Rollen- oder Bandprüfständen sowie für die Messsensorik benötigt.

Bei den bekannten Prüfständen ist problematisch, dass für deren sicheren Betrieb eine permanente Ankopplung an eine Energieversorgung erforderlich ist. Hierdurch ist die Nutzbarkeit der Prüfstände auf vorgegebene Orte eingeschränkt, nämlich auf solche Orte, an denen eine geeignete Energieversorgung vorhanden ist. Als Folge hieraus ergibt sich eine stark eingeschränkte Flexibilität hinsichtlich der Nutzbarkeit der Prüfstände an unterschiedlichen Orten. An Orten, an denen keine Energieversorgung vorhanden ist, ist eine Nutzung der Prüfstände nicht möglich.

Der vorliegenden Erfindung liegt daher die Aufgabe zu Grunde, einen Prüfstand der eingangs genannten Art derart auszugestalten und weiterzubilden, dass eine besonders flexible und quasi ortsunabhängige Nutzbarkeit mit konstruktiv einfachen Mitteln ermöglicht ist.

Die voranstehende Aufgabe wird durch einen Prüfstand mit den Merkmalen des Anspruchs 1 gelöst. Danach ist der Prüfstand der eingangs genannten Art derart ausgestaltet und weitergebildet, dass er einen aufladbaren Energiespeicher zur Bereitstellung der für den Betrieb der Messeinrichtung erforderlichen elektrischen Energie und eine Zuführeinrichtung zum Zuführen der Energie in den Energiespeicher aufweist.

In erfindungsgemäßer Weise ist zunächst erkannt worden, dass der Betrieb eines Prüfstands für Kraftfahrzeuge durchaus auch ohne permanenten Anschluss an eine externe Energieversorgung möglich ist. In weiter erfindungsgemäßer Weise ist dann erkannt worden, dass die Ausstattung eines Prüfstands mit einem aufladbaren Energiespeicher zur Bereitstellung der für den Betrieb der Messeinrichtung erforderlichen elektrischen Energie in Verbindung mit einer Zuführeinrichtung zum Zuführen der Energie in den Energiespeicher die voranstehende Aufgabe auf überraschend einfache Weise löst. Durch den aufladbaren Energiespeicher wird der Prüfstand ortsunabhängig und kann auch ohne das Vorhandensein einer externen Energieversorgung betrieben werden. Hierzu weist der Prüfstand weiterhin eine Zuführeinrichtung zum Zuführen der Energie in den Energiespeicher auf. Mittels einer derartigen Zuführeinrichtung ist ein einfaches Aufladen des Energiespeichers quasi vor Ort vereinfacht.

Folglich ist mit dem erfindungsgemäßen Prüfstand ein Prüfstand realisiert, bei dem eine besonders flexible und quasi ortsunabhängige Nutzbarkeit mit konstruktiv einfachen Mitteln ermöglicht ist.

Je nach Erfordernis könnte der Energiespeicher ein elektrisch arbeitender Energiespeicher oder ein mechanisch arbeitender Energiespeicher sein. Ein elektrisch arbeitender Energiespeicher könnte im Sinne eines Akkumulators ausgebildet sein und ein mehrfaches Aufladen ermöglichen. Ein mechanisch arbeitender Energiespeicher könnte beispielsweise mittels Rotationsmassen eine Energiespeicherung realisieren. Dabei ist wesentlich, dass zumindest soviel Energie gespeichert wird, dass ein Kraftfahrzeug in der erforderlichen Weise geprüft werden kann, bevor ein neuer Aufladevorgang erforderlich ist.

Ein derartiger Energiespeicher könnte extern aufladbar sein. Eine derartige externe Aufladung könnte mittels eines Anschlusses an ein geeignetes Energieversorgungsnetz erfolgen. Nach einer derartigen Aufladung könnte der Prüfstand an beliebigen Orten eingesetzt werden. Als Energieversorgungsnetz könnte ein übliches Stromnetz dienen.

Alternativ zu einer externen Aufladung könnte der Energiespeicher durch ein Kraftfahrzeug über die Zuführeinrichtung aufladbar sein. In einer besonders vorteilhaften Situation könnte ein zu prüfendes Kraftfahrzeug zunächst die Aufladung des Energiespeichers in der erforderlichen Weise durchführen, bevor die Messung bzw. die Prüfung des Kraftfahrzeugs erfolgt. Mit anderen Worten könnte das zu prüfende Fahrzeug die für die eigene Prüfung benötigte Energie selbst zuführen oder erzeugen und danach über den Energiespeicher bereitstellen.

Im Hinblick auf eine besonders effiziente und einfache Aufladung des Energiespeichers könnte die Zuführeinrichtung zur Umwandlung von Bewegungsenergie oder mechanischer Energie, vorzugsweise Rotationsenergie, in elektrische Energie für den Energiespeicher ausgebildet sein. Letztendlich könnte die Zuführeinrichtung einen Generator zur Erzeugung elektrischer Energie ausweisen.

Bei einer konkreten vorteilhaften Ausgestaltung eines Prüfstands könnte die Messeinrichtung eine Abrolleinrichtung zum Abrollen von Rädern des Kraftfahrzeugs aufweisen und könnte die Zuführeinrichtung der Abrolleinrichtung zugeordnet oder mit dieser gekoppelt oder in diese integriert sein. Mit anderen Worten könnte eine Zusammenwirkung einer Abrolleinrichtung mit der Zuführeinrichtung realisiert sein, so dass über die Abrolleinrichtung Energie für den Energiespeicher erzeugt werden könnte. Ein Kraftfahrzeug, beispielsweise das zu prüfende Kraftfahrzeug, könnte mit seiner angetriebenen Achse auf die Abrolleinrichtung auffahren und diese antreiben, so dass die dabei anfallende Energie über die Zuführeinrichtung in elektrische Energie gewandelt und dem Energiespeicher zugeführt wird.

Mittels der im Energiespeicher angesammelten Energie, könnte ein Aktor oder mindestens eine Rolle oder ein Laufband der Abrolleinrichtung angetrieben werden. Hierzu könnte ein geeigneter Elektromotor vorgesehen sein. Mittels der im Energiespeicher angesammelten Energie könnte des Weiteren eine Messsensorik und ggf. eine Auswerteelektronik des Prüfstands betrieben werden.

In vorteilhafter Weise könnte der Energiespeicher zur Bereitstellung der für mindestens einen Aktor oder für den Antrieb mindestens einer Rolle oder eines Laufbands der Abrolleinrichtung erforderlichen elektrischen Energie ausgebildet sein. Die Dimensionierung und Kapazität des Energiespeichers ist dabei auf die für den Betrieb der Messeinrichtung erforderliche Energie abzustellen.

Hinsichtlich einer besonders kompakten Ausgestaltung des Prüfstands könnte der Energiespeicher zwischen zwei Rollen der Abrolleinrichtung angeordnet sein. Hierdurch könnte eine einzelne Abrolleinrichtung des Prüfstands gemeinsam mit dem Energiespeicher gehandhabt und an beliebigen Orten für eine Prüfung des Fahrzeugs positioniert werden.

Des Weiteren könnte der Energiespeicher zur Bereitstellung der für den Betrieb der Messsensorik erforderlichen elektrischen Energie ausgebildet sein. Auch hier könnte die Dimensionierung und Kapazität des Energiespeichers auf die für den Betrieb der Messsensorik erforderliche Energiemenge abgestellt sein.

Bei einer besonders vorteilhaften Ausgestaltung könnte dem Energiespeicher eine Überwachungseinrichtung für den Ladezustand des Energiespeichers zugeordnet sein. Entsprechend dem Ladezustand könnte die Betriebsbereitschaft des Prüfstandes optisch und/oder akustisch angezeigt werden. Hierzu könnte ein entsprechendes Leuchtmittel und/oder ein entsprechender Tongenerator vorgesehen sein.

Grundsätzlich könnte der Betrieb der Messeinrichtung bei Erreichen eines vorgebbaren Ladeniveaus des Energiespeichers mittels der Energie im Energiespeicher automatisch beginnen. Mit anderen Worten könnte ein Kraftfahrzeug zunächst die für die Prüfung erforderliche Energie über die Zuführeinrichtung im Energiespeicher bereitstellen, wobei die Prüfung dann bei Erreichen eines vorgebbaren Ladeniveaus automatisch startet. Hierzu könnte der Prüfstand oder die Messeinrichtung eine entsprechende logische Schaltung bzw. Elektronik aufweisen. Über beispielsweise einen mit dem Prüfstand kommunizierenden Computer könnte eine entsprechende Programmierung des Prüfstands oder der Messeinrichtung erfolgen, so dass individuelle Prüfungen des Kraftfahrzeugs ermöglicht sind. Insbesondere könnte über einen derartigen Computer das vorgebbare Ladeniveau des Energiespeichers festgelegt werden, ab welchem der Betrieb der Messeinrichtung automatisch beginnt.

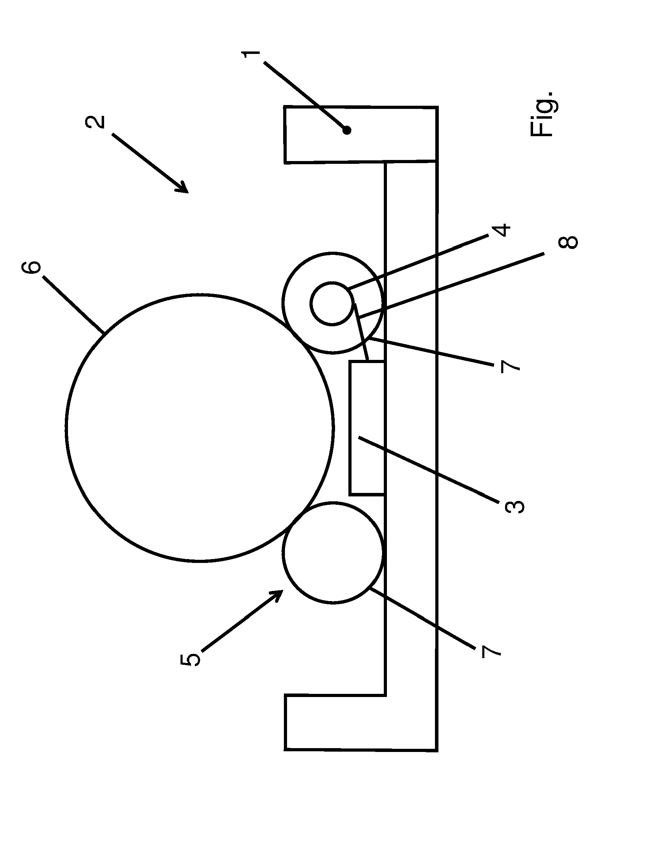

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige
- Fig.: in einer schematischen Darstellung ein Ausführungsbeispiel eines erfindungsgemäßen Prüfstands für Kraftfahrzeuge.

Die einzige Fig. zeigt in einer schematischen Darstellung einen Prüfstand für Kraftfahrzeuge, wobei der Prüfstand als Rollenprüfstand ausgebildet ist. Der Prüfstand weist eine eine Messsensorik 1 aufweisende Messeinrichtung 2 zur Aufnahme von Prüfdaten auf. Im Hinblick auf eine besonders flexible und quasi ortsunabhängige Nutzbarkeit des Prüfstands mit konstruktiv einfachen Mitteln weist der Prüfstand einen aufladbaren Energiespeicher 3 für die Bereitstellung der für den Betrieb der Messeinrichtung 2 erforderlichen elektrischen Energie und eine Zuführeinrichtung 4 zum Zuführen der Energie in den Energiespeicher 3 auf. Mit einem über die Zuführeinrichtung 4 aufgeladenen Energiespeicher 3 kann der Prüfstand an unterschiedlichen Orten betrieben werden, selbst wenn dort keine beispielsweise elektrische Energieversorgung vorhanden ist. Hierdurch ist quasi ein energieautarker Betrieb des Prüfstands oder Prüfsystems ermöglicht.

Der Energiespeicher 3 ist bei dem in der einzigen Fig. gezeigten Ausführungsbeispiel ein elektrisch arbeitender Energiespeicher 3. Der Energiespeicher 3 kann extern aufgeladen werden, wobei bei dem hier gezeigten Ausführungsbeispiel eine Aufladbarkeit über die Zuführeinrichtung 4 mittels eines Kraftfahrzeugs ermöglicht ist. Dabei könnte das zu prüfende Kraftfahrzeugs die Aufladung bewirken. Hierzu ist die Zuführeinrichtung 4 zur Umwandlung von Bewegungsenergie oder mechanischer Energie in elektrischer Energie für die Energiespeicher 3 ausgebildet.

Im Konkreten weist die Messeinrichtung 2 eine Abrolleinrichtung 5 zum Abrollen von Rädern 6 des Kraftfahrzeugs auf und ist die Zuführeinrichtung 4 der Abrolleinrichtung 5 zugeordnet. Dabei kann die Zuführeinrichtung 4 in die Abrolleinrichtung 5 und genauer gesagt in eine Rolle 7 der Abrolleinrichtung 5 integriert sein.

Bei einem Konkreten Beispiel könnte das zu prüfende Fahrzeug mit seiner angetriebenen Achse auf die Abrolleinrichtung 5 auffahren und diese dann antreiben. Hierbei kann dann der Umwandlungsprozess von Rotationsenergie in elektrische Energie mittels der Rolle 7 und der Zuführeinrichtung 4 erfolgen. Die umgewandelte Energie lädt dann den Energiespeicher 3 über eine elektrische Verbindung 8, beispielsweise ein Kabel oder eine starre Leitung, mit elektrischer Energie auf. Der über eine Rolle 7 und die Zuführeinrichtung 4 erfolgte Energieumwandlungsprozess kann solange durchgeführt werden, bis im Energiespeicher 3 ausreichend Energie angesammelt ist, um die Prüfung des Kraftfahrzeugs mittels der im Energiespeicher 3 vorhandenen Energie zu ermöglichen. Der Betrieb der Messeinrichtung 2 könnte bei Erreichen eines vorgebbaren Ladeniveaus des Energiespeichers 3 mittels der Energie im Energiespeicher 3 automatisch beginnen. Hierzu könnte dem Energiespeicher 3 einer Überwachungseinrichtung für den Ladezustand des Energiespeichers 3 zugeordnet sein. Sobald die Überwachungseinrichtung ausreichend Energie detektiert, kann der Messvorgang automatisch starten.

Der Energiespeicher 3 ist derart dimensioniert, dass er ausreichend Energie aufnehmen kann, um beispielsweise den Antrieb mindestens einer Rolle 7 für einen entsprechenden Prüfvorgang, beispielsweise eine Bremsenprüfung, zu gewährleisten. Des Weiteren könnte der Energiespeicher 3 zusätzlich die Messsensorik 1 mit einer erforderlichen eklektischen Energie versorgen. Auch könnten vorhandene Anzeigeeinrichtungen und Steuerungen der Messeinrichtung 2 mittels der im Energiespeicher 3 angesammelten Energie betrieben werden.

Hinsichtlich der Bereitstellung einer besonders kompakten Ausführung eines Prüfstands ist der Energiespeicher 3 zwischen zwei Rollen 7 der Abrolleinrichtung 5 angeordnet. Der Energiespeicher 3 ist quasi als Akkumulator ausgebildet.

Als Aktor für den Antrieb mindestens einer Rolle 7 könnte ein geeigneter Elektromotor eingesetzt werden, der beispielsweise in die Rolle 7 integriert sein könnte.

Im Konkreten könnte in einem Prüfstand die Abrolleinrichtung 5 vom Kraftfahrzeug angetrieben und damit ein Generator beispielsweise der Zuführeinrichtung 4 betrieben werden. Die anfallende Energie wird in einen Energiespeicher 3 oder Akkumulator geladen. Diese Energie kann dann umgekehrt einen Elektromotor sowie die gesamte Elektronik und/oder Messsensorik 1 für die Messtechnik bzw. Messeinrichtung 2 antreiben. Ermittelte Daten und Daten hinsichtlich der Regelung können dank dieser Technik drahtlos übertragen und beispielsweise an ein Display und/oder an eine Auswerteeinrichtung weitergegeben werden. Grundsätzlich könnte das Kraftfahrzeug beispielsweise ein Personenkraftwagen, ein Lastkraftwagen oder ein Motorrad sein.

Hinsichtlich weiterer vorteilhafter Ausgestaltungen des erfindungsgemäßen Prüfstands wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Messsensorik
- 2: Messeinrichtung
- 3: Energiespeicher
- 4: Zuführeinrichtung
- 5: Abrolleinrichtung
- 6: Rad
- 7: Rolle
- 8: Verbindung

## Patentansprüche

1. Prüfstand für Kraftfahrzeuge, insbesondere Rollen- oder Bandbremsprüfstand, mit einer eine Messsensorik (1) aufweisenden Messeinrichtung (2) zur Aufnahme von Prüfdaten,
**gekennzeichnet durch** einen aufladbaren Energiespeicher (3) zur Bereitstellung der für den Betrieb der Messeinrichtung (2) erforderlichen elektrischen Energie und eine Zuführeinrichtung (4) zum Zuführen der Energie in den Energiespeicher (3).

2. Prüfstand nach Anspruch 1, **dadurch gekennzeichnet, dass** der Energiespeicher (3) ein elektrisch arbeitender Energiespeicher (3) ist oder dass der Energiespeicher (3) ein mechanisch - vorzugsweise mittels Rotationsmassen - arbeitender Energiespeicher (3) ist.

3. Prüfstand nach Anspruch 1 oder 2, **dadurch gekennzeichnet, dass** der Energiespeicher (3) extern oder durch ein Kraftfahrzeug über die Zuführeinrichtung (4) aufladbar ist.

4. Prüfstand nach einem der Ansprüche 1 bis 3, **dadurch gekennzeichnet, dass** die Zuführeinrichtung (4) zur Umwandlung von Bewegungsenergie oder mechanischer Energie, vorzugsweise Rotationsenergie, in elektrische Energie für den Energiespeicher (3) ausgebildet ist.

5. Prüfstand nach einem der Ansprüche 1 bis 4, **dadurch gekennzeichnet, dass** die Messeinrichtung (2) eine Abrolleinrichtung (5) zum Abrollen von Rädern (6) des Kraftfahrzeugs aufweist und dass die Zuführeinrichtung (4) der Abrolleinrichtung (5) zugeordnet oder mit dieser gekoppelt oder in diese integriert ist.

6. Prüfstand nach einem der Ansprüche 1 bis 5, **dadurch gekennzeichnet, dass** der Energiespeicher (3) zur Bereitstellung der für mindestens einen Aktor oder für den Antrieb mindestens einer Rolle (7) oder eines Laufbands der Abrolleinrichtung (5) erforderlichen elektrischen Energie ausgebildet ist.

7. Prüfstand nach Anspruch 5 oder 6, **dadurch gekennzeichnet, dass** der Energiespeicher (3) zwischen zwei Rollen (7) der Abrolleinrichtung (5) angeordnet ist.

8. Prüfstand nach einem der Ansprüche 1 bis 7, **dadurch gekennzeichnet, dass** der Energiespeicher (3) zur Bereitstellung der für den Betrieb der Messsensorik (1) erforderlichen elektrischen Energie ausgebildet ist.

9. Prüfstand nach einem der Ansprüche 1 bis 8, **dadurch gekennzeichnet, dass** dem Energiespeicher (3) eine Überwachungseinrichtung für den Ladezustand des Energiespeichers (3) zugeordnet ist.

10. Prüfstand nach einem der Ansprüche 1 bis 9, **dadurch gekennzeichnet, dass** der Betrieb der Messeinrichtung (2) bei Erreichen eines vorgebbaren Ladeniveaus des Energiespeichers (3) mittels der Energie im Energiespeicher (3) automatisch beginnt.
